# EUROPEAN PATENT APPLICATION

(11) **EP 3 190 753 A1**
(43) Date of publication of application: **12.07.2017**
(21) Application number: 14901256.9
(22) Date of filing: 17.11.2014
(51) Int. Cl.: H04L 12/723

(54) **TUNNEL SIGNAL DEGRADATION NOTIFYING AND SWITCHING METHOD AND APPARATUS, AND COMPUTER STORAGE MEDIUM**

(30) Priority: 02.09.2014 CN 201410444519
(71) Applicant: ZTE Corporation, Shenzhen city, Guangdong 518057 (CN)
(72) Inventor: FU, Zhitao, Shenzhen Guangdong 518057 (CN)
(74) Representative: Brevalex
(86) International application number: PCT/CN2014/091300
(87) International publication number: WO 2016/033870

(57) **Abstract**

The disclosure discloses a method for tunnel signal degradation notifying and switching. The method includes: when an intermediate node apparatus determines that packet loss rate reaches a preset threshold when messages of the intermediate node apparatus are forwarded, searching for Label Switched Path (LSP) information passing through the intermediate node apparatus; sending a notification message to a head node apparatus corresponding to the LSP information found, the notification message containing the LSP information and indication information for indicating that an LSP is unavailable; the head node apparatus receiving the notification message; and when it is determined that the notification message contains the LSP information and the indication information for indicating that the LSP corresponding to the LSP information is unavailable, switching the LSP to a corresponding standby LSP according to the notification message. The disclosure also discloses a device for tunnel signal degradation notifying, a device for tunnel switching, and a computer storage medium.

## Description

### TECHNICAL FIELD

The disclosure relates to the field of data network communication, and in particular to a tunnel signal degradation notifying and tunnel switching method and device, and a computer storage medium.

### BACKGROUND

Resource Reservation Protocol-Traffic Engineer (RSVP-TE) is a traffic engineering technology based on Multi-Protocol Label Switching (MPLS). The service traffic is forwarded in the RSVP-TE tunnel through four components such as the information distribution, path calculation, signaling interaction, and traffic forwarding.

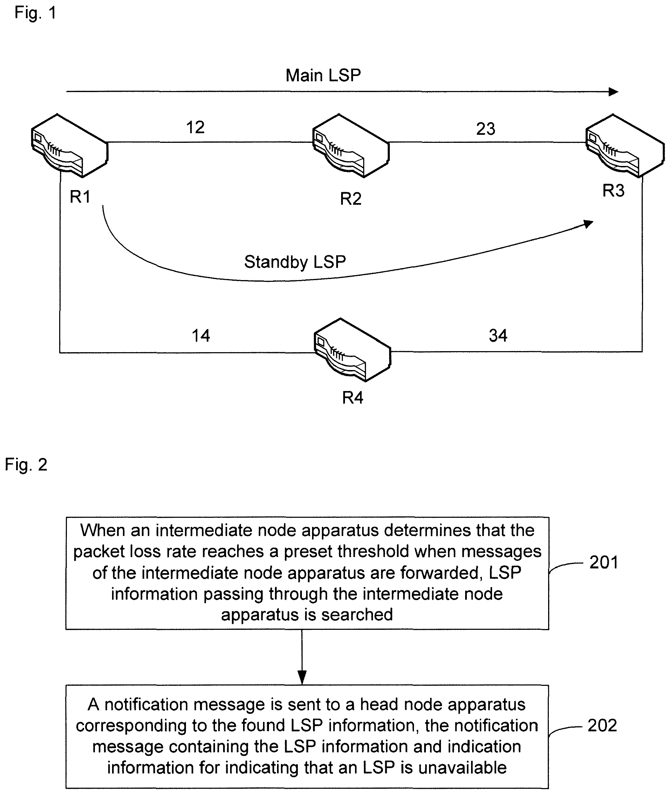

In general, the deployment of RSVP-TE tunnels needs to take protection measures so as to be able to quickly switch to the standby Label Switched Path (LSP) when the main LSP fails. As shown in Fig. 1, the figure includes routing apparatuses R1, R2, R3 and R4, which are switches or routers. The routing apparatuses are divided into a head node apparatus, a tail node apparatus, and an intermediate node apparatus. Specifically, in Fig. 1, R1 is the head node apparatus, R4 is the tail node apparatus, and R2 and R3 are intermediate node apparatuses. The main LSP path in the RSVP-TE tunnel is R1-R2-R3, that is, the service traffic (mainly refers to the message) finally reaches R1 through R3 via R2. The standby LSP path is R1-R4-R3. When the main LSP path fails, it is necessary to perform LSP switching at the tunnel head node, and the service traffic follows the standby LSP.

In the prior art, LSP Bidirectional Forwarding Detection (BFD) can be used to detect whether the LSP path fails. LSP BFD sends a test message periodically. If the response message to the test message has not been received after the test message is sent for a certain number of times, it is assumed that the tested path fails. However, it is found in the actual project deployment that, in most cases, due to signal degradation caused by network congestion, the loss of service messages is too much, but the LSP BFD technology may not detect this situation, so that the service cannot be switched in time and continues to be forwarded in the main LSP path, affecting the forwarding effect of the service.

### SUMMARY

In order to solve the existing technical problems, the embodiments of the disclosure expect to provide a tunnel signal degradation notifying and tunnel switching method and device, and a computer storage medium.

An embodiment of the disclosure provides a method for tunnel signal degradation notifying, the method including:
when an intermediate node apparatus determines that packet loss rate reaches a preset threshold when messages of the intermediate node apparatus are forwarded, searching for LSP information passing through the intermediate node apparatus; and
sending a notification message to a head node apparatus corresponding to the LSP information found, the notification message containing the LSP information and indication information for indicating that an LSP is unavailable.

In the above solution, sending a notification message to a head node apparatus corresponding to the LSP information found includes:
sending a notification message to the head node apparatus corresponding to the LSP for each LSP, the notification message containing the LSP information of the LSP and indication information for indicating that the LSP is unavailable; or
sending a notification message for all LSPs with the same head node, the notification message containing the LSP information of all LSPs with the same head node and indication information for indicating that these LSPs are unavailable.

In the above solution, the notification message is a Notify message or a Path-Err message.

In the above solution, the indication information indicating that the LSP is unavailable is a type error code of <25, 13> in the ERROR_SPEC object in the Notify message or the Path-Err message.

An embodiment of the disclosure also provides a method for tunnel switching, the method including:
a head node apparatus receiving the notification message; and
when it is determined that the notification message contains LSP information and indication information for indicating that the LSP corresponding to the LSP information is unavailable, switching the LSP to a corresponding standby LSP according to the notification message.

In the above solution, the notification message is a Notify message or a Path-Err message.

In the above solution, the indication information indicating that the LSP is unavailable is a type error code of <25, 13> in the ERROR_SPEC object in the Notify message or the Path-Err message.

In the above solution, switching the LSP to a corresponding standby LSP according to the notification message includes:
searching for a standby LSP corresponding to the LSP, and switching the LSP to the corresponding standby LSP.

An embodiment of the disclosure provides a device for tunnel signal degradation notifying, which is located on an intermediate node apparatus, the device including: a packet loss rate detecting module, a first judging module, a LSP information searching module, and a notifying module.

The packet loss rate detecting module is configured to detect the packet loss rate when messages in the intermediate node apparatus are forwarded;
the first judging module is configured to judge whether packet loss rate reaches a preset threshold, and trigger the LSP information searching module when the packet loss rate reaches the preset threshold;
the LSP information searching module is configured to search for LSP information passing through the intermediate node apparatus when being triggered by the judging module; and
the notifying module is configured to construct a notification message and send the notification message to a head node apparatus corresponding to the LSP information found; wherein the notification message containing the LSP information and indication information for indicating that the LSP is unavailable.

An embodiment of the disclosure provides a device for tunnel switching, located on a head node apparatus, the device including: a notification message receiving module, a second judging module, and a switching module; wherein
the notification message receiving module is configured to receive the notification message sent by an intermediate node apparatus;
the second judging module is configured to judge whether the notification message contains LSP information and indication information for indicating that the LSP corresponding to the LSP information is unavailable, and trigger the switching module when the judging result is YES; and
the switching module is configured to switch the LSP to a corresponding standby LSP according to the notification message.

An embodiment of the disclosure provides a computer storage medium including a set of computer-executable instructions for performing the tunnel signal degradation notifying method described in the embodiment of the disclosure.

An embodiment of the disclosure provides a computer storage medium including a set of computer-executable instructions for performing the tunnel switching method described in the embodiment of the disclosure.

Embodiments of the disclosure provides a tunnel signal degradation notifying and tunnel switching method, and device, and a computer storage medium. The method includes: when an intermediate node apparatus determines that packet loss rate reaches a preset threshold when messages of the intermediate node apparatus are forwarded, searching for LSP information passing through the intermediate node apparatus; sending a notification message to a head node apparatus corresponding to the LSP information found, the notification message containing the LSP information and indication information for indicating that an LSP is unavailable; the head node apparatus receiving the notification message; and when it is determined that the notification message contains the LSP information and the indication information for indicating that the LSP corresponding to the LSP information is unavailable, switching the LSP to a corresponding standby LSP according to the notification message. In this way, when the LSP in the RSVP-TE tunnel loses the messages due to the signal degradation resulted from network congestion, the problem can be notified to the head node apparatus corresponding to the corresponding LSP in time so that the head node can switch the corresponding LSP to the standby LSP in time, so as to avoid the problems, such as further loss of the messages and low communication efficiency, due to not timely switching of LSP, and also solve the problem in the traditional art that the signal degradation caused by network congestion cannot be detected, so that LSP switching cannot be initiated in time.

### BRIEF DESCRIPTION OF THE DRAWINGS

Fig. 1 is a basic structure diagram of an RSVP-TE tunnel in the traditional art;
Fig. 2 is a first flow diagram of a tunnel protection switching method provided by an embodiment of the disclosure;
Fig. 3 is a second flow diagram of a tunnel protection switching method provided by an embodiment of the disclosure;
Fig. 4 is a first basic structure diagram of an RSVP-TE tunnel provided by an embodiment of the disclosure;
Fig. 5 is a second basic structure diagram of an RSVP-TE tunnel provided by an embodiment of the disclosure;
Fig. 6 is a first basic structure diagram of a tunnel protection switching device provided by an embodiment of the disclosure; and
Fig. 7 is a second basic structural diagram of a tunnel protection switching device provided by an embodiment of the disclosure.

### DETAILED DESCRIPTION

In the embodiment of the disclosure, when an intermediate node apparatus determines that packet loss rate reaches a preset threshold when messages of the intermediate node apparatus are forwarded, LSP information passing through the intermediate node apparatus is searched. A notification message is sent to a head node apparatus corresponding to the LSP information found, the notification message containing the LSP information and indication information for indicating that the LSP found is unavailable. The head node apparatus receives the notification message, and when it is determined that the notification message contains LSP information and indication information for indicating that the LSP corresponding to the LSP information is unavailable, the LSP is switched to a corresponding standby LSP according to the notification message.

The disclosure will now be described in further detail with reference to the accompanying drawings and specific embodiments.

### Embodiment 1

The first embodiment of the disclosure provides a method for tunnel signal degradation notifying. As shown in Fig. 2, the method includes the following steps.

Step 201: When an intermediate node apparatus determines that the packet loss rate reaches a preset threshold when messages of the intermediate node apparatus are forwarded, LSP information passing through the intermediate node apparatus is searched.

Before this step, the intermediate node apparatus needs to detect the packet loss rate when messages of the intermediate node apparatus are forwarded. In the actual implementation, various detecting methods of packet loss rate in the field can be used to detect the packet loss rate, which is not limited herein.

Before detecting the packet loss rate, the intermediate node apparatus needs to preset the preset threshold of the packet loss rate. The preset threshold of the packet loss rate can be set according to the actual needs, and different packet loss rates have different degrees of influence on the message forwarding. Therefore, the selection of the preset threshold of the packet loss rate can depends on the degree of tolerance for the packet loss rate in the RSVP-TE tunnel. When the accuracy of message forwarding needs to be ensured in the RSVP-TE tunnel, the preset threshold of the packet loss rate can be set relatively low, and if the RSVP-TE tunnel can tolerate a certain degree of packet loss, the preset threshold of the packet loss rate can be set relatively high.

After the preset threshold of the packet loss rate has been set, the intermediate node apparatus detects the packet loss rate when messages of the intermediate node apparatus are forwarded. When the packet loss rate reaches the preset threshold, it means that the message forwarding of the LSP passing through the intermediate node apparatus has signal degradation, and the subsequent message forwarding by the LSP is prevented.

Therefore, the intermediate node apparatus searches for LSP information passing through the intermediate node apparatus.

Since when the message of the RSVP-TE protocol is sent, the LSP information forwarded by the message will be carried at the same time, the intermediate node apparatus can locally save all the LSP information that has been forwarded by the intermediate node apparatus by saving the LSP information in the message. The LSP information includes: head node apparatus information, intermediate node apparatus information and tail node apparatus information.

Step 202: A notification message is sent to a head node apparatus corresponding to the LSP information found, the notification message containing the LSP information and indication information for indicating that an LSP is unavailable.

After the LSP information passing through the intermediate node apparatus is found in Step 201, in Step 202 the notification message is sent to a head node apparatus corresponding to the LSP.

Sending a notification message to a head node apparatus corresponding to the LSP found includes:
sending a notification message to the head node apparatus corresponding to the LSP for each LSP, the notification message containing the LSP information of the LSP and indication information for indicating that the LSP is unavailable;
or sending a notification message for all LSPs with the same head node, the notification message containing the LSP information of all LSPs with the same head node and indication information for indicating that these LSPs are unavailable.

In the actual implementation, the notification message may be implemented using various messages that can contain LSP information and indication information. For example, it can be implemented using a Notify message or a Path-Err message.

When it is implemented using a Notify message or a Path-Err message, the LSP information can be carried in the message and the error description ERROR_SPEC object in the message is used to indicate that the LSP corresponding to the LSP information is unavailable. Specifically, the type error code of <25, 13> can be newly added to the ERROR_SPEC object, and the type error code is used to indicate that the LSP corresponding to the LSP information is unavailable.

### Embodiment 2

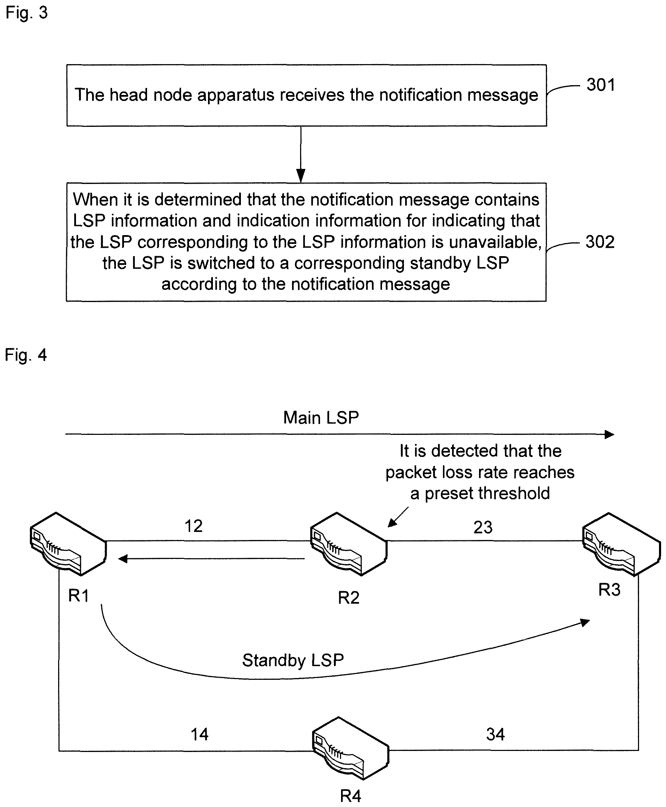

Embodiment 2 of the disclosure provides a tunnel switching method. As shown in Fig. 3, the method includes the following steps.

Step 301: The head node apparatus receives the notification message.

In this step, the head node apparatus receives the notification message sent to the head node apparatus;

Step 302: When it is determined that the notification message contains LSP information and indication information for indicating that the LSP corresponding to the LSP information is unavailable, the LSP is switched to a corresponding standby LSP according to the notification message.

The notification message may be implemented using various messages that can contain LSP information and indication information. For example, it can be implemented using a Notify message or a Path-Err message.

When it is implemented using a Notify message or a Path-Err message, the LSP information can be carried in the message and the error description ERROR_SPEC object in the message is used to indicate that the LSP corresponding to the LSP information is unavailable. Specifically, the type error code of <25, 13> can be newly added to the ERROR_SPEC object, and the type error code is used to indicate that the LSP corresponding to the LSP information is unavailable.

The head node apparatus receiving the notification message analyzes the notification message. When the indication information indicating that the LSP is unavailable is analyzed, the LSP information is further analyzed, so as to determine the LSP message corresponding to the analyzed LSP information has signal degradation, and thus the LSP is unavailable.

Thus, the head node apparatus searches for a standby LSP corresponding to the LSP and switches the LSP to its corresponding standby LSP, thereby preventing the message from continuing to be forwarded via the LSP that has been unavailable.

The tunnel signal degradation notifying method and the tunnel switching method provided in some embodiments of the disclosure will be described in detail with reference to two specific examples.

### Example 1

Referring to Fig. 4, when the intermediate node apparatus R2 performs the packet loss rate detection to detect that the packet loss reaches the set threshold in the outcoming interface direction, the intermediate node apparatus R2 searches for all the LSP information passing through the link 23 in the direction.

Only one main LSP taking the head node apparatus as R1 passes through the link 23 in the direction in Fig. 4. Therefore, R2 sends, to R1, a Notify message which carries the information of the LSP found, and uses the special error code of <25, 13> in the ERROR_SPEC object in the Notify message.

R1 receives the Notify message, analyzes the error code of type <25, 13>, and knows that the signal degradation event has occurred downstream. R1 can find the standby LSP of the local LSP through the LSP information carried in the message, thus completing the main-to-standby switching.

### Example 2

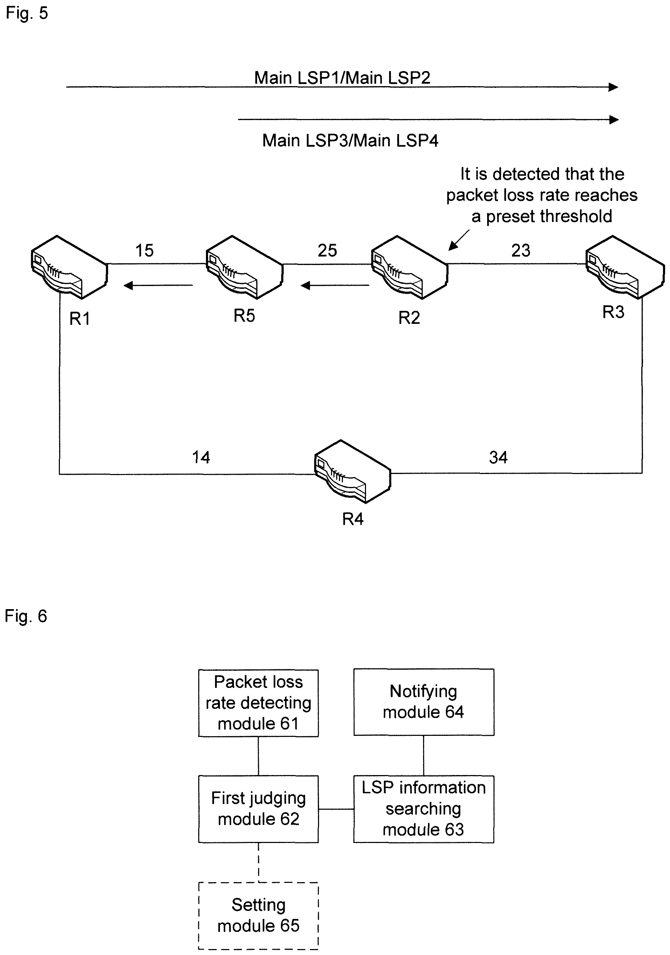

As shown in Fig. 5, the main node apparatuses of both the main LSP1 and the main LSP2 are R1, and the head node apparatuses of both the main LSP3 and the main LSP4 is R5. Also in the case of the link 23 on R2 has signal degradation, since four LSPs are influenced: the main LSP1, the main LSP2, the main LSP3 and the main LSP4, the node apparatuses of the four LSPs are not identical, and the LSPs with the same head node are sent in a Notify message. The main LSP1 and the main LSP2 will be sent in a Notify message, and the destination of the message is R1. The main LSP3 and the main LSP4 will be sent in another Notify message, and the destination of the message is R5. The header node R1 receives the Notify message, analyzes the special error code <25, 13>, and knows that the signal degradation event has occurred downstream. At the same time, the header node can respectively analyze the information of the main LSP1 and the main LSP2, and find the respective standby LSP corresponding to the LSP1 and the LSP2 in the node, so as to perform the main-to-standby switching. The head node R5 processes the received Notify message in the same manner, and performs the main-to-standby switching of LSP3 and LSP4 correspondingly.

### Embodiment 3

Embodiment 3 of the disclosure provides a tunnel signal degradation notifying device located on an intermediate node apparatus. As shown in Fig. 6, the device includes: a packet loss rate detecting module 61, a first judging module 62, a LSP information searching module 63, and a notifying module 64.

In particular, the packet loss rate detecting module 61 is configured to detect the packet loss rate when messages in the intermediate node apparatus are forwarded;
the first judging module 62 is configured to judge whether packet loss rate reaches a preset threshold, and trigger the LSP information searching module when the packet loss rate reaches the preset threshold;
the LSP information searching module 63 is configured to search for LSP information passing through the intermediate node apparatus when being triggered by the judging module; and
the notifying module 64 is configured to construct a notification message and send the notification message to a head node apparatus corresponding to the LSP information found; the notification message containing the LSP information and indication information for indicating that the LSP is unavailable.

The device further includes: a setting module 65 configured to set the preset threshold of the packet loss rate.

The notifying module 64 is configured to send the notification message to a head node apparatus corresponding to the LSP information found in the following manner:
sending a notification message to the head node apparatus corresponding to the LSP for each LSP, the notification message containing the LSP information of the LSP and indication information for indicating that the LSP is unavailable; or
sending a notification message for all LSPs with the same head node, the notification message containing the LSP information of all LSPs with the same head node and indication information for indicating that these LSPs are unavailable.

The notification message is a Notify message or a Path-Err message; the indication information indicating that the LSP is unavailable is a type error code of <25, 13> in the ERROR_SPEC object in the Notify message or the Path-Err message.

### Embodiment 4

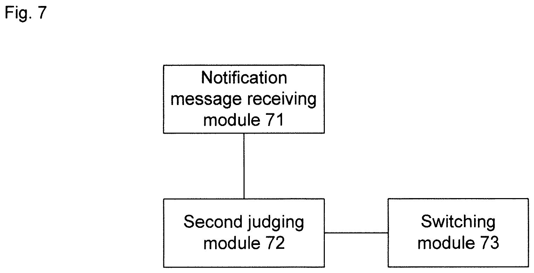

Embodiment 4 of the disclosure provides a tunnel switching device, located on a head node apparatus, the structure diagram of which is shown in Fig. 7. The device includes: a notification message receiving module 71, a second judging module 72, and a switching module 73.

In particular, the notification message receiving module 71 is configured to receive the notification message sent by an intermediate node apparatus;
the second judging module 72 is configured to judge whether the notification message contains LSP information and indication information for indicating that the LSP corresponding to the LSP information is unavailable, and trigger the switching module when the judging result is YES; and
the switching module 73 is configured to switch the LSP to a corresponding standby LSP according to the notification message.

The notification message may be a Notify message or a Path-Err message; the indication information indicating that the LSP is unavailable is a type error code of <25, 13> in the ERROR_SPEC object in the Notify message or the Path-Err message.

The switching module 73 is configured to switch the LSP to a corresponding standby LSP in the following manner:
searching for a standby LSP corresponding to the LSP, and switching the LSP to the corresponding standby LSP.

In the specific implementation process, the packet loss rate detecting module 61, the first judging module 62, the LSP information searching module 63, the notifying module 64, and the setting module 65 described above may be implemented by a Central Processing Unit (CPU), a Micro Processing Unit (MPU), a Digital Signal Processor (DSP), or a Field-Programmable Gate Array (FPGA) in the intermediate node apparatus. The notification message receiving module 71, the second judging module 72, and the switching module 73 may be implemented by a CPU, an MPU, a DSP, or an FPGA within the head node apparatus.

The embodiment of the disclosure provides a computer storage medium including a set of computer-executable instructions for performing the tunnel signal degradation notifying method according to the embodiment of the disclosure.

The embodiment of the disclosure provides a computer storage medium including a set of computer-executable instructions for performing the tunnel switching method according to the embodiment of the disclosure.

Those skilled in the art should understand that the embodiments of the disclosure can provide a method, a system or a computer program product. Thus, forms of hardware embodiments, software embodiments or embodiments integrating software and hardware can be adopted in the disclosure. Moreover, a form of the computer program product implemented on one or more computer available storage media (including, but not limited to, a disk memory, an optical memory and the like) containing computer available program codes can be adopted in the disclosure.

The disclosure is described with reference to flowcharts and/or block diagrams of the method, the equipment (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

Preferred embodiments of the disclosure are presented as above, and are not intended to limit the scope of protection of the disclosure.

## Claims

1. A method for tunnel signal degradation notifying, the method comprising:
when an intermediate node apparatus determines that packet loss rate reaches a preset threshold when messages of the intermediate node apparatus are forwarded, searching for Label Switched Path (LSP) information passing through the intermediate node apparatus; and
sending a notification message to a head node apparatus corresponding to the LSP information found, the notification message containing the LSP information and indication information for indicating that an LSP is unavailable.

2. The method according to claim 1, wherein sending a notification message to a head node apparatus corresponding to the LSP found comprises:
sending a notification message to the head node apparatus corresponding to the LSP for each LSP, the notification message containing the LSP information of the LSP and indication information for indicating that the LSP is unavailable; or
sending a notification message for all LSPs with the same head node, the notification message containing the LSP information of all LSPs with the same head node and indication information for indicating that these LSPs are unavailable.

3. The method according to claim 1 or 2, wherein the notification message is a Notify message or a Path-Err message.

4. The method according to claim 3, wherein the indication information indicating that the LSP is unavailable is a type error code of <25, 13> in the ERROR_SPEC object in the Notify message or the Path-Err message.

5. A method for tunnel switching, the method comprising:
receiving, by a head node apparatus, a notification message; and
when it is determined that the notification message contains Label Switched Path (LSP) information and indication information for indicating that the LSP corresponding to the LSP information is unavailable, switching the LSP to a corresponding standby LSP according to the notification message.

6. The method according to claim 5, wherein the notification message is a Notify message or a Path-Err message.

7. The method according to claim 6, wherein the indication information indicating that the LSP is unavailable is a type error code of <25, 13> in the ERROR_SPEC object in the Notify message or the Path-Err message.

8. The method according to any one of claims 5 to 7, wherein switching the LSP to a corresponding standby LSP according to the notification message comprises:
searching for a standby LSP corresponding to the LSP, and switching the LSP to the corresponding standby LSP.

9. A device for tunnel signal degradation notifying, the device is located on an intermediate node apparatus, the device comprising: a packet loss rate detecting module, a first judging module, a Label Switched Path (LSP) information searching module, and a notifying module; wherein
the packet loss rate detecting module is configured to detect the packet loss rate when messages in the intermediate node apparatus are forwarded;
the first judging module is configured to judge whether packet loss rate reaches a preset threshold, and trigger the LSP information searching module when the packet loss rate reaches the preset threshold;
the LSP information searching module is configured to search for LSP information passing through the intermediate node apparatus when being triggered by the judging module; and
the notifying module is configured to construct a notification message and send the notification message to a head node apparatus corresponding to the LSP information found; wherein the notification message containing the LSP information and indication information for indicating that the LSP is unavailable.

10. The device according to claim 9, wherein the notifying module is configured to send the notification message to a head node apparatus corresponding to the LSP information found in the following manner:
sending a notification message to the head node apparatus corresponding to the LSP for each LSP, the notification message containing the LSP information of the LSP and indication information for indicating that the LSP is unavailable; or
sending a notification message for all LSPs with the same head node, the notification message containing the LSP information of all LSPs with the same head node and indication information for indicating that these LSPs are unavailable.

11. The device according to claim 9 or 10, wherein the notification message is a Notify message or a Path-Err message.

12. The device according to claim 11, wherein the indication information indicating that the LSP is unavailable is a type error code of <25, 13> in the ERROR_SPEC object in the Notify message or the Path-Err message.

13. A device for tunnel switching, located on a head node apparatus, the device comprising: a notification message receiving module, a second judging module, and a switching module; wherein
the notification message receiving module is configured to receive the notification message sent by an intermediate node apparatus;
the second judging module is configured to judge whether the notification message contains Label Switched Path (LSP) information and indication information for indicating that the LSP corresponding to the LSP information is unavailable, and trigger the switching module when the judging result is YES; and
the switching module is configured to switch the LSP to a corresponding standby LSP according to the notification message.

14. The device according to claim 13, wherein the notification message is a Notify message or a Path-Err message.

15. The device according to claim 14, wherein the indication information indicating that the LSP is unavailable is a type error code of <25, 13> in the ERROR_SPEC object in the Notify message or the Path-Err message.

16. A computer storage medium comprising a set of computer-executable instructions for performing the method for tunnel signal degradation notifying according to any one of claims 1 to 4.

17. A computer storage medium comprising a set of computer-executable instructions for performing the method for tunnel switching according to any one of claims 5 to 8.
